# EUROPEAN PATENT APPLICATION

(11) **EP 4 617 906 A1**
(43) Date of publication of application: **17.09.2025**
(21) Application number: 25152787.5
(22) Date of filing: 20.01.2025
(51) Int. Cl.: G06F 16/3329, G06F 16/335, G06N 3/0475

(54) **INFORMATION PROCESSING APPARATUS, INFORMATION PROCESSING METHOD, AND COMPUTER-READABLE STORAGE MEDIUM**

(30) Priority: 14.03.2024 CN 202410295105
(71) Applicant: Fujitsu Limited, Kawasaki-shi, Kanagawa 211-8588 (JP)
(72) Inventor: Fang, Lu, Beijing, 100027 (CN); Zheng, Zhongguang, Beijing, 100027 (CN); Sun, Jun, Beijing, 100027 (CN)
(74) Representative: Hoffmann Eitle

(57) **Abstract**

Disclosed are an information processing apparatus, an information processing method and a computer-readable storage medium. The information processing apparatus may include: a determination unit, configured to determine that auxiliary information for input data is required, in a case where a first keyword extracted from the input data is not included in a first subset corresponding to the first keyword in a predetermined data set; and an auxiliary information acquisition unit, configured to, in a case where the determination unit determines that the auxiliary information is required, extract, from the first subset, multiple pieces of data corresponding to the first keyword, and select, based on the input data, one or more pieces of data from the extracted multiple pieces of data, as the auxiliary information for generating response data.

## Description

### CROSS-REFERENCE TO RELATED APPLICATIONS

This application claims the benefit and priority of Chinese Application No.20241029 5105.8, filed on March 14, 2024, the entire disclosure of which is incorporated herein by reference.

### FIELD

The present disclosure relates to the field of information processing, and in particular to an information processing apparatus, an information processing method, and a computer-readable storage medium.

### BACKGROUND

A technique that automatically generates response data is required in many applications. Therefore, it is desired to provide a technique that facilitates generation of more accurate response data.

### SUMMARY

Hereinafter provided is a brief summary of the present disclosure, which is intended to provide a basic understanding of aspects of the present disclosure. It should be understood, however, that this summary is not an exhaustive overview of the present disclosure. The summary is not intended to identify key or critical portions of the present disclosure or to delineate the scope of the disclosure. The purpose is merely to present some concepts about the present disclosure in a simplified form, as a prelude to the more detailed description that is presented later.

An objective of the present disclosure is to provide an information processing apparatus, an information processing method, and a computer-readable storage medium with improvements, with which generation of more accurate response data can be facilitated, for example.

According to an aspect of the present disclosure, an information processing apparatus is provided, including: a determination unit, configured to determine that auxiliary information for input data is required, in a case where a first keyword extracted from the input data is not included in a first subset corresponding to the first keyword in a predetermined data set; and an auxiliary information acquisition unit, configured to, in a case where the determination unit determines that the auxiliary information is required, extract, from the first subset, multiple pieces of data corresponding to the first keyword, and select, based on the input data, one or more pieces of data from the extracted multiple pieces of data, as the auxiliary information for generating response data.

According to another aspect of the present disclosure, an information processing method is provided, including: determining that auxiliary information for input data is required, in a case where a first keyword extracted from the input data is not included in a first subset corresponding to the first keyword in a predetermined data set; and on determining that the auxiliary information is required, extracting, from the first subset, multiple pieces of data corresponding to the first keyword, and selecting, based on the input data, one or more pieces of data from the extracted multiple pieces of data, as the auxiliary information for generating response data.

According to other aspects of the present disclosure, computer program codes and a computer program product for implementing the above-described method according to the present disclosure and a computer-readable storage medium having the computer program codes for implementing the above-described method according to the present disclosure recorded thereon are further provided.

Other aspects of the embodiments of the present disclosure are set forth in the following sections of the specification, where the detailed description is provided to fully disclose preferred embodiments of the embodiments of the present disclosure, rather than to impose limitations thereon.

### BRIEF DESCRIPTION OF THE DRAWINGS

The present disclosure may be better understood by referring to the detailed description given below in conjunction with the drawings. In all drawings, same or similar reference signs are utilized to represent same or similar components. The drawings, together with the following detailed description, are incorporated into the specification and form a part of the specification, and serve to further illustrate the preferred embodiments of the present disclosure and to explain the principle and advantages of the present disclosure by way of example. In the drawings:
Figure 1 is a block diagram illustrating an exemplary functional configuration of an information processing apparatus according to an embodiment of the present disclosure;
Figure 2 is a schematic diagram illustrating a specific architectural example of an information processing apparatus according to an embodiment of the present disclosure;
Figure 3A and Figure 3B illustrate examples of provided prompts;
Figure 4A and Figure 4B illustrate an example of a portion of a predetermined data set;
Figures 5A and 5B illustrate other examples of provided prompts;
Figure 6 illustrates an example of a generated code;
Figure 7A and Figure 7B illustrate further examples of provided prompts;
Figure 8 is a block diagram illustrating an exemplary functional configuration of an auxiliary information acquisition unit according to an embodiment of the present disclosure;
Figure 9 is a schematic diagram illustrating a specific architectural example of an auxiliary information acquisition unit according to an embodiment of the present disclosure;
Figure 10A to Figure 11B illustrate examples of generated prompt information;
Figure 12 is a block diagram illustrating an exemplary functional configuration of an information processing apparatus according to an embodiment of the present disclosure;
Figure 13 is a schematic diagram illustrating a specific architectural example of an information processing apparatus according to an embodiment of the present disclosure;
Figure 14 is a flowchart illustrating an exemplary process of an information processing method according to an embodiment of the present disclosure;
Figure 15 is a flowchart illustrating an exemplary process of an information processing method according to an embodiment of the present disclosure; and
Figure 16 is a block diagram illustrating an exemplary structure of a personal computer applicable in an embodiment of the present disclosure.

### DETAILED DESCRIPTION

Exemplary embodiments of the present disclosure are described below in conjunction with the drawings. For the sake of clarity and conciseness, not all features of an actual embodiment are described in the specification. However, it is to be appreciated that numerous implementation-specific decisions shall be made while implementing any of such actual embodiments so as to achieve specific objectives of a developer, for example, to comply with system- and business-related constraining conditions which may vary from one implementation to another. Furthermore, it should be understood that the development work, although may be complicated and time-consuming, is only a routine task for those skilled in the art benefiting from the present disclosure.

For example, terms herein such as "first", "second", and the like may be used to distinguish different elements from each other, and not to limit a number, order, and the like, of the elements.

Here, it should be further noted that in order to avoid obscuring the present disclosure due to unnecessary details, only apparatus structures and/or processing steps closely related to the solutions according to the present disclosure are illustrated in the drawings, and other details less related to the present disclosure are omitted.

Embodiments according to aspects of the present disclosure are described in detail below in conjunction with the drawings.

### Embodiments in the First aspect

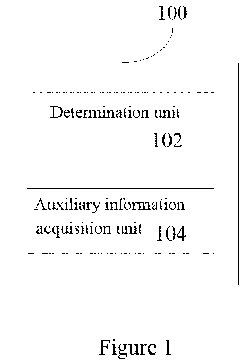

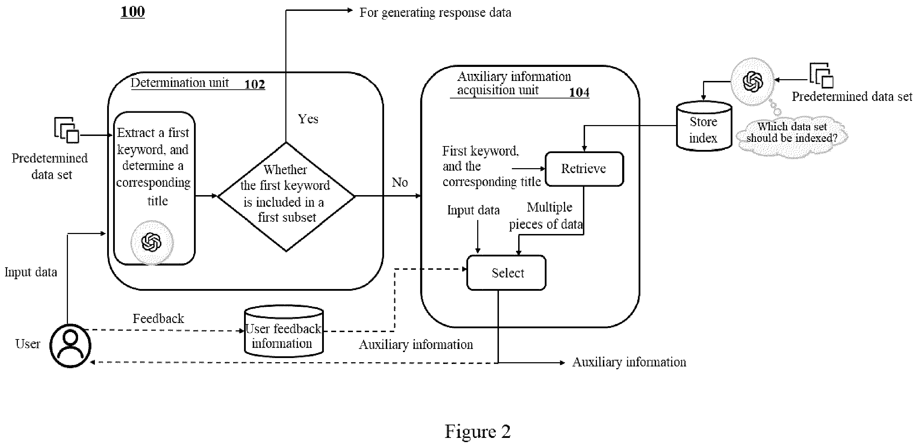

Figure 1 is a block diagram illustrating an exemplary functional configuration of an information processing apparatus 100 according to an embodiment of the present disclosure. Figure 2 is a schematic diagram illustrating a specific architectural example of an information processing apparatus 100 according to an embodiment of the present disclosure. In Figure 2, some processes are shown with dashed arrows, which indicates that one or more of these processes may not be included in some examples. In addition, in Figure 2, 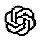 represents a large language model.

As shown in Figure 1, the information processing apparatus 100 according to an embodiment of the present disclosure may include a determination unit 102 and an auxiliary information acquisition unit 104.

The determination unit 102 may be configured to determine that auxiliary information for input data (for example, a query) is required, in a case where a first keyword extracted from the input data is not included in a first subset corresponding to the first keyword in a predetermined data set.

The auxiliary information acquisition unit 104 may be configured to: in a case where the determination unit 102 determines that the auxiliary information is required, extract multiple pieces of data corresponding to the first keyword from the first subset, and select, based on the input data, one or more pieces of data from the extracted multiple pieces of data, as the auxiliary information for generating response data. In this way, more appropriate response data can be obtained, and an accuracy of final response data obtained can be improved.

In some examples, as shown in Figure 2, the auxiliary information acquisition unit 104 may select one or more pieces of data as the auxiliary information from the extracted multiple pieces of data based on the input data and user feedback information. In this way, more appropriate response data can be obtained, and the accuracy of the final response data obtained can be further improved.

For example, the user feedback information may include feedback information on the response data from a first user who inputs the input data. In some examples, the user feedback information further includes feedback information on respective response data from one or more second users different from the first user. In this way, an amount of user feedback information can be increased and the accuracy of the final response data generated can be further improved.

In some examples, the user feedback information may include feedback information on the auxiliary information. In this way, an accuracy of the auxiliary information can be improved, and thereby the accuracy of the final response data generated can be further improved. For example, the feedback information on the auxiliary information may include feedback information on the auxiliary information from the first user. The feedback information on the auxiliary information may further include feedback information on respective auxiliary information from one or more second users. In this way, the accuracy of the auxiliary information can be further improved, and the accuracy of the final response data generated can be further improved.

In some examples, the user feedback information may include feedback information on response data (for example, feedback information on response data from a first user, and feedback information on respective response data from one or more second users) and feedback information on auxiliary information (for example, feedback information on auxiliary information from the first user, and feedback information on respective auxiliary information from one or more second users). In this way, the accuracy of the final response data generated can be further improved.

For example, the information processing apparatus 100 may be applied in a store (including a physical store, an online store, and the like) to help a user determine sales information and the like. For example, the predetermined data set may be a customer consumption record in a store, such as a service usage record, a product purchase record and the like.

For example, the information processing apparatus 100 may be applied in a hospital to help a user determine patient treatment information and the like. For example, the predetermined data set may be a treatment record of a patient, such as a medication usage record, a test record and the like. Apparently, an application of the information processing apparatus 100 is not limited to the above examples. For example, the information processing apparatus 100 may be further applied for querying traffic violation information, and the like.

For example, the predetermined data set may include subsets each corresponding to different titles. For example, the predetermined data set may include identification information of an object, time, target information, and the like. The identification information of an object, time and target information may respectively correspond to titles "object identification information", "time" and "target information". The object and target information may change with an application scenario. As an example, in a case where the information processing apparatus 100 is applied in a store or drug store, the object may be a consumer, and the target information may be a name of a product purchased by the consumer and/or a name of a service used by the consumer, which is not limited thereto. As another example, in a case where the information processing apparatus 100 is used in a hospital, the object may be a patient, and the target information may be a name of a medicine purchased by the patient, a name of a test received by the patient, and the like, which is not limited thereto.

For example, the predetermined data set may be provided by a user and stored in a memory. For example, the predetermined data set may be structured data, such as a SQL database or a CSV file, which is not limited thereto.

The memory may be included in the information processing apparatus 100 or accessible by the information processing apparatus 100. In some examples, the memory stores only a part of the predetermined data set, such as a subset of the predetermined data set that is determined need to be indexed (as shown in Figure 2), so that an amount of information storage is reduced. As an example, a subset of the predetermined data set that includes text may be determined as the subset that needs to be indexed.

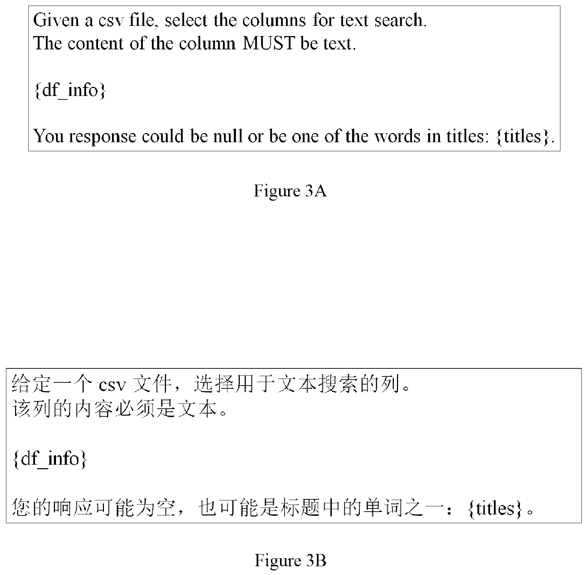

For example, the subset that needs to be indexed may be determined through a large language model. In this case, prompts as shown in Figure 3A or Figure 3B may be inputted to the large language model to assist the large language model in determining a subset that needs to be indexed. In Figure 3A and Figure 3B, {df_info} represents information of a predetermined data set, including titles of individual subsets and other data except the titles of the individual subsets. Here, {titles} ({ 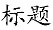 }) represents titles of the individual subsets.

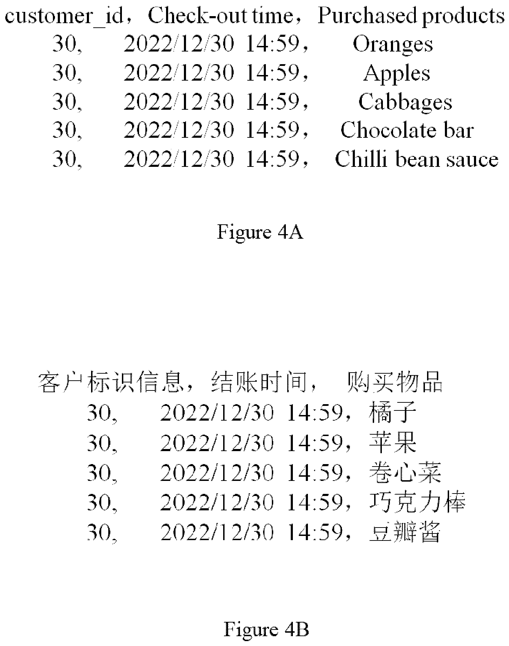

In an example of a portion of the predetermined data set shown in Figure 4A and Figure 4B, titles of the individual subsets are "Customer_id" (" 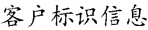 "), "Check-out time" (" 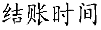 "), and "Purchased products" (" 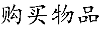 ") respectively. In an example where a subset including text is determined as the subset that needs to be indexed, for the example shown in Figure 4A and Figure 4B, data corresponding to the title "Purchased products" (" 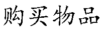 ") may be determined as data that needs to be indexed.

For example, the input data may include information about the target information. As an example, the input data may include at least one of: a product name, a service name, a product category, and a service category.

For a better understanding of the embodiments of the present disclosure, the information processing apparatus 100 is described further below with an example in which the information processing apparatus 100 is applied in a store, the object is a consumer, and the target information is a name of a product purchased by the consumer.

The information processing apparatus 100 may operate based on various language environments. In this specification, for convenience of illustration, the description is made mainly with an example in which the information processing apparatus 100 operates based on an English environment. An English words/sentence, when first appears, is followed with corresponding Chinese characters in parentheses.

For example, the determination unit 102 may extract a first keyword from the input data, determine a title corresponding to the first keyword, retrieve the first keyword from a first subset corresponding to the title in the predetermined data set, and determine that auxiliary information for the input data is required in a case of failing to retrieve the first keyword.

For example, in a case where the input data includes a product name, a service name, a product category and/or a service category, the first keyword may include the product name, the service name, the product category and/or the service category included in the input data.

For example, the determination unit 102 may generate a code (for example, a computer language code, such as a Python code) based on the input data, and extract the first keyword and a title corresponding to the first subset from the code. In this way, the first keyword and the title can be obtained more accurately, and thereby the accuracy of the final response data generated is further improved.

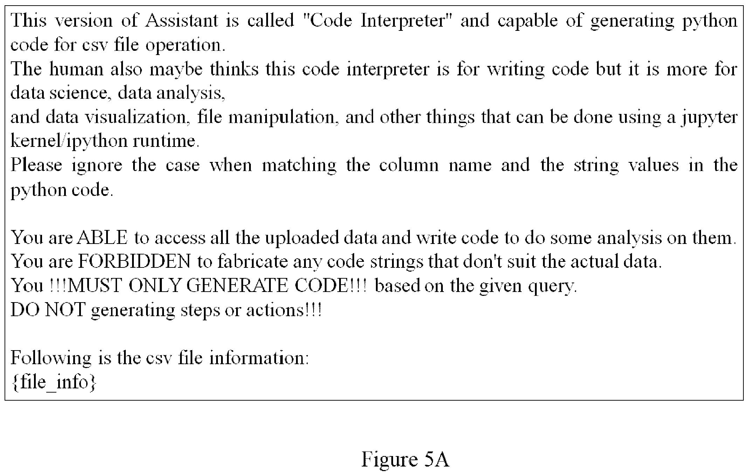

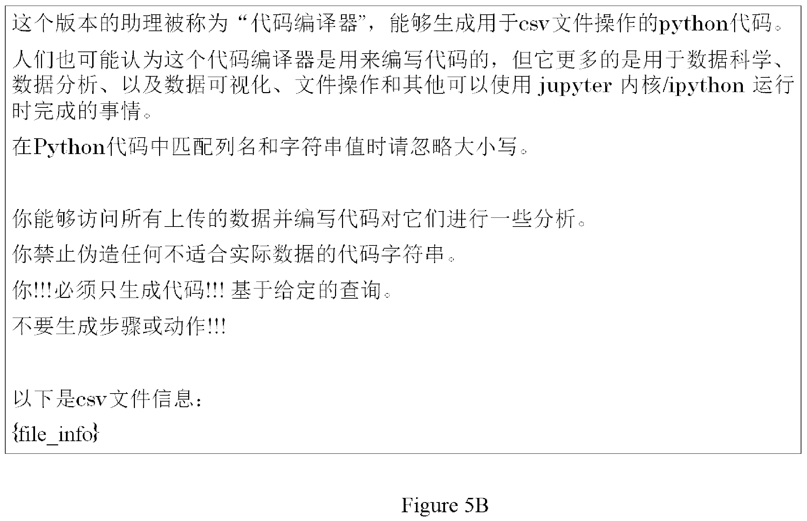

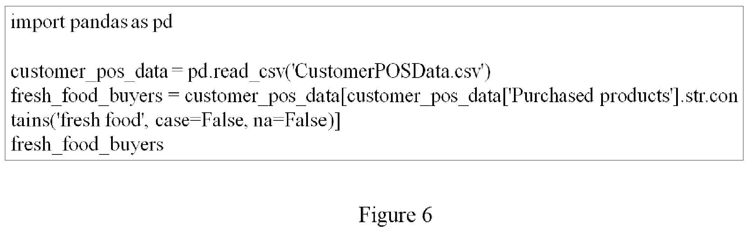

For example, in a case where the determination unit 102 is implemented by a large language model, prompts may be provided to the large language model to assist the large language model in generating an appropriate code. Figure 5A and Figure 5B show examples of prompts provided in an English environment and a Chinese environment, respectively. Figure 6 shows an example of a code generated based on input data "who bought fresh food?" (" 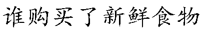 "). In Figure 5A and Figure 5B, {file_info} represents file information, such as information of a predetermined data set.

As can be seen from Figure 6, the generated code includes the expected first keyword "fresh food" and the title "Purchased products" corresponding to the first keyword.

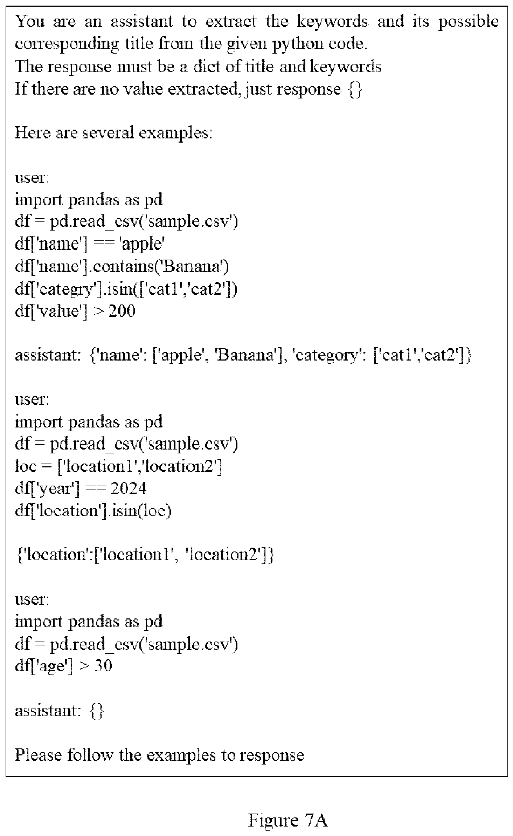

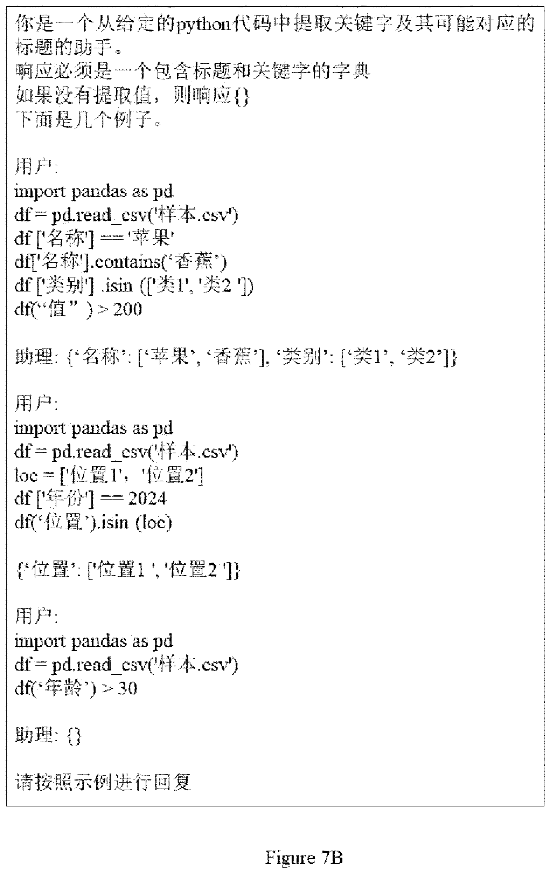

For example, prompts may be provided to the large language model so that the first keyword and the corresponding title extracted by the large language model from the generated code are more accurate. Figure 7A and Figure 7B illustrate examples of prompts provided in an English environment and a Chinese environment, respectively. In a case where a prompt shown in Figure 7A is provided, an extraction result is {"Purchased products": "fresh food"]}, which includes the expected first keyword "fresh food" and the corresponding title "Purchased products". As can be seen, the first keyword and the corresponding title can be extracted accurately through the above method.

In the example shown in Figure 4A, the column corresponding to "Purchased products" (an example of the first subset) shows specific product names, which does not include the first keyword "fresh food". Therefore, the determination unit 102 may determine that auxiliary information is required. In this case, the auxiliary information acquisition unit 104 may extract multiple pieces of data corresponding to the first keyword from the first subset, and select one or more pieces of data from the extracted multiple pieces of data based on the input data or based on the input data and the user feedback information, as the auxiliary information.

In some examples, for each piece of data from the extracted multiple pieces of data, the auxiliary information acquisition unit 104 may determine whether the piece of data matches the first keyword based on the input data or based on the input data and the user feedback information. For example, the auxiliary information acquisition unit 104 may determine whether the piece of data matches the first keyword based on whether the piece of data belongs to a category defined by the first keyword. In a case where it is determined that the piece of data matches the first keyword (for example, the piece of data belongs to a category defined by the first keyword), the auxiliary information acquisition unit 104 may select the piece of data as the auxiliary information. On the other hand, in a case where it is determined that the piece of data does not match the first keyword (i.e., the piece of data does not belong to the category defined by the first keyword), the auxiliary information acquisition unit 104 does not select the piece of data as the auxiliary information.

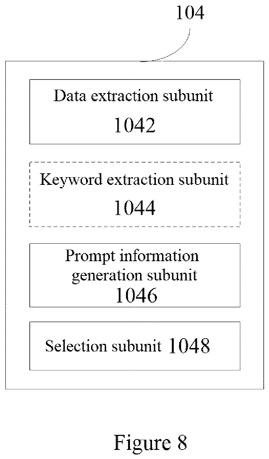

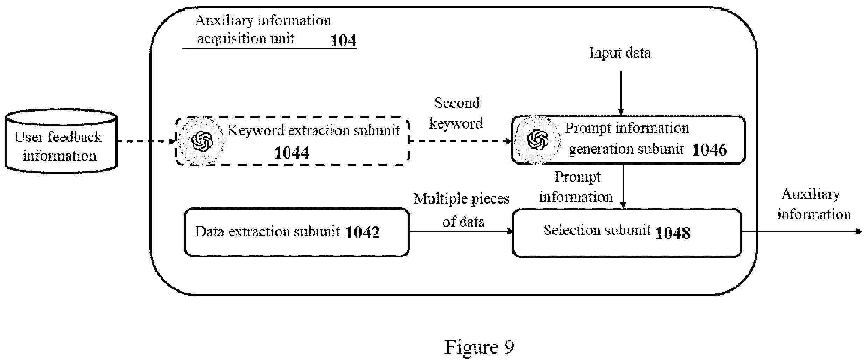

An example of a specific configuration of the auxiliary information acquisition unit 104 is described below with reference to Figure 8 and Figure 9. Figure 8 is a block diagram illustrating an exemplary functional configuration of an auxiliary information acquisition unit according to an embodiment of the present disclosure. Figure 9 is a schematic diagram illustrating a specific architectural example of an auxiliary information acquisition unit according to an embodiment of the present disclosure. The keyword extraction subunit 1044 is shown in Figure 8 and Figure 9 by a dotted box, which means that the auxiliary information acquisition unit 104 may not include the keyword extraction subunit 1044 in some examples.

In some examples, as shown in Figure 8, the auxiliary information acquisition unit 104 may include a data extraction subunit 1042, a prompt information generation subunit 1046, and a selection subunit 1048.

The data extraction subunit 1042 may be configured to extract, from the first subset, multiple pieces of data corresponding to the first keyword. For example, for the example described above in conjunction with Figures 3A to 7B, the data extraction subunit 1042 may extract multiple pieces of data corresponding to the first keyword "fresh food" from the column (an example of the first subset) corresponding to the title "Purchased products". An obtained result is: "Broccoli", "Cabbages", "Watermelon", "Eggs", "Bananas", "Potatoes", "Onions", "Orange Juice", "Apples", "Eggplants", "Oranges", "Prawn Crackers", "Pears", "Chestnuts", "Iced Tea", "Cookies"•••••• (" 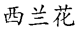 ", " 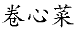 ", " 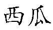 ", " 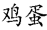 ", " 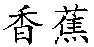 ", " 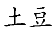 ", " 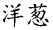 ", " 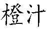 ", " 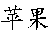 ", " 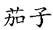 ", " 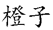 " , " 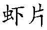 ", " 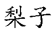 "," 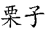 ", " 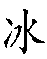 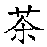 ", " 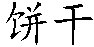 "••••••).

The prompt information generation subunit 1046 may be configured to generate prompt information based on the input data.

The selection subunit 1048 may be configured to select, based on the prompt information generated by the prompt information generation subunit 1046, one or more pieces of data as the auxiliary information from the multiple pieces of data extracted by the data extraction subunit 1042. With the auxiliary information obtained in this way, the accuracy of the final response data generated can be further improved.

In some examples, the auxiliary information acquisition unit 104 may further include the keyword extraction subunit 1044. The keyword extraction subunit 1044 may be configured to extract a second keyword from the user feedback information. The user feedback information may include one or more pieces of feedback information.

For example, the second keyword may include a product name and/or a service name. For example, for feedback information "Orange Juice do not belong to fresh food" (" 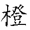 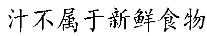 " ), the second keyword extracted is "Orange Juice".

The prompt information generation subunit 1044 may be configured to generate the prompt information based on the input data and matching results between the second keyword and each of the extracted multiple pieces of data. With the auxiliary information obtained based on the prompt information obtained in this way, the accuracy of the final response data generated can be further improved.

In some examples, for each piece of data, the data may be considered matching the second keyword in a case where the data and the second keyword both include words related to a same category. For example, in the example described above in conjunction with Figure 3A to Figure 7B, for each piece of data, the data may be considered matching the second keyword in a case where a product name included in the data belongs to a same category as a product name included in the second keyword. For example, for the example of multiple pieces of data mentioned above corresponding to the first keyword "fresh food", "Orange Juice" and "Iced Tea" belong to a same category as the second keyword "Orange Juice" extracted from the feedback information "Orange Juice do not belong to fresh food". Therefore, it may be determined that "Orange Juice" and "Iced Tea" match the second keyword "Orange Juice", and the other data do not match the second keyword "Orange Juice".

For example, in a case where the auxiliary information acquisition unit 104 is implemented by a large language model, prompts may be provided to the large language model to enable the large language model to more accurately determine whether each piece of data matches the second keyword. For example, a prompt provided may be "Do {keyword_from_retrieval} and {keyword_from_feedback} belong to a broad category?" ( " {keyword_from_retrieval} 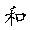 { keyword _from_feedback} 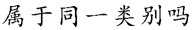 ? " ). Here, {keyword_from_retrieval} represents data extracted by the data extraction subunit 1042, and {keyword_from_feedback} represents the second keyword extracted by the keyword extraction subunit 1044.

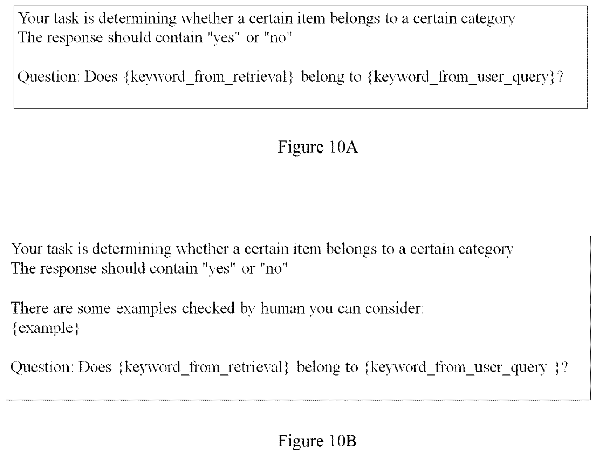

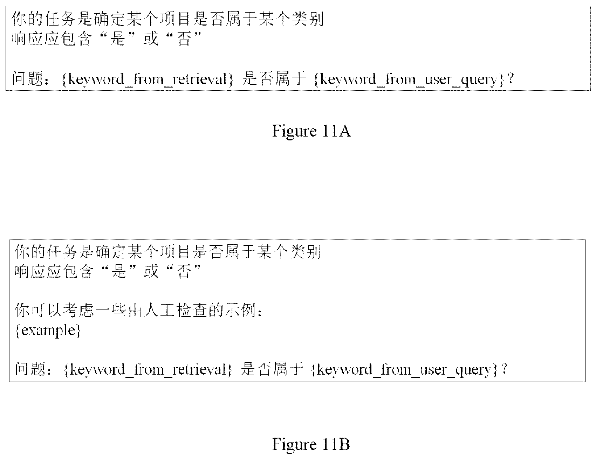

In some examples, for each piece of data in the extracted multiple pieces of data, feedback information corresponding to the piece of data in the user feedback information is included in the prompt information in a case where the piece of data matches the second keyword. Additionally, the user feedback information is not included in the prompt information in a case where none of the extracted multiple pieces of data matches the second keyword. Figure 10A and Figure 10B illustrate prompt information that does not include user feedback information and prompt information that includes a corresponding feedback information, respectively. Figure 11A and Figure 11B illustrate Chinese versions corresponding to Figure 10A and Figure 10B, respectively. In Figure 10A to Figure 11B, "keyword_from_user_query" represents the first keyword extracted from the input data.

In Figure 10B and Figure 11B, "example" (" 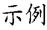 ") may be feedback information which is in the user feedback information and corresponds to the data matching the second keyword among the multiple pieces of data extracted. For example, for the example of multiple pieces of data mentioned above corresponding to the first keyword "fresh food", data "Orange Juice" matches the second keyword "Orange Juice" extracted from the feedback information "Orange Juice do not belong to fresh food". Therefore, the prompt information may include the feedback information "Orange Juice do not belong to fresh food" corresponding to the data "Orange Juice" in the user feedback information.

### Embodiments in the second aspect

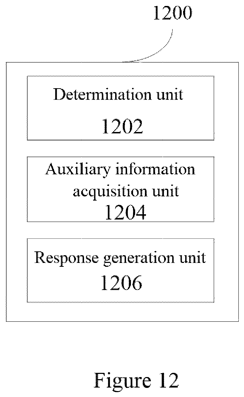

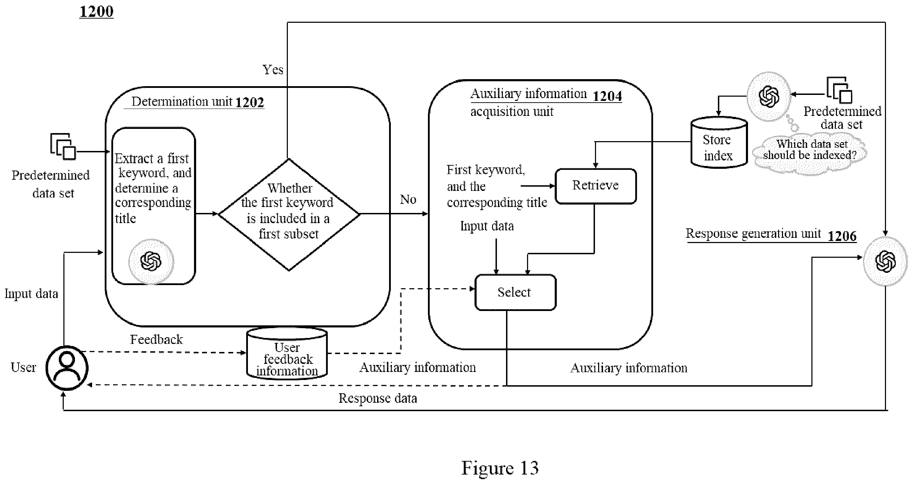

Figure 12 is a block diagram illustrating an exemplary functional configuration of an information processing apparatus 1200 according to an embodiment of the present disclosure. Figure 13 is a schematic diagram illustrating a specific architectural example of an information processing apparatus 1200 according to an embodiment of the present disclosure. As shown in Figure 12 and Figure 13, the information processing apparatus 1200 according to an embodiment of the present disclosure may include a determination unit 1202, an auxiliary information acquisition unit 1204, and a response generation unit 1206.

For example, the determination unit 1202 and the auxiliary information acquisition unit 1204 may have similar configurations to those of the determination unit 102 and the auxiliary information acquisition unit 104 described above in the embodiment of the first aspect, and therefore specific details may be referred to the above description and are not described in detail below.

The response generation unit 1206 may be configured to generate response data for input data. For example, in a case where the determination unit 1202 determines that auxiliary information is not required, the response generation unit 1206 may generate the response data based on the input data. In some examples, the response generation unit 1206 may retrieve a first keyword from a target data set, and generate the response data based on the input data and the retrieved data. For example, in the example described above in conjunction with Figure 3A to Figure 7B, for input data "who bought Apples?", the column corresponding to "Purchased products" (an example of the first subset) includes the first keyword "Apples". Therefore, the determination unit 1202 may determine that auxiliary information is not required. The response generation unit 1206 may retrieve the first keyword "Apples" from the target data set, and determine Customer_id in the retrieved data (for example, data containing the first keyword "Apples") as the response data.

On the other hand, in a case where the determination unit 1202 determines that auxiliary information is required, the response generation unit 1206 may generate response data based on the auxiliary information acquired by the auxiliary information acquisition unit 1204 and the input data. In some examples, the response generation unit 1206 may generate a third keyword based on the auxiliary information, retrieve the corresponding data from the target data set based on the third keyword, and generate the response data based on the input data and the retrieved data. As an example, in a case where the target data set is the same as the predetermined data set, the response generation unit 1206 may use the auxiliary information as the third keyword.

For example, in the example described above in conjunction with Figure 3A to Figure 7B, for input data "who bought fresh food?", the column corresponding to "Purchased products" (an example of the first subset) shows specific product names, which does not include the first keyword "fresh food". Therefore, the determination unit 1202 may determine that auxiliary information is required. In an example, the auxiliary information generated by the auxiliary information acquisition unit 1204 is: "Broccoli", "Cabbages", "Watermelon", "Eggs", "Bananas", "Potatoes", "Onions", "Oranges", "Apples" ", "Eggplants", "Pears", "Chestnuts", and "Peaches"; and the response generation unit 1206 may use the auxiliary information as the third keyword. On the other hand, in a comparison example without the auxiliary information, the third keyword generated is: "Potato Chips", "Potato Sticks", "Broccoli", "Cabbages", "Watermelon", "Eggs", "Bananas", "Potatoes", "Onions", "Oranges", "Apples", "Eggplants", "Pears", "Chestnuts", and "Peaches". It can be seen that in the comparison example without the auxiliary information, the third keyword includes "Potato Chips" ( " 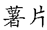 " ) and "Potato Sticks" ( " 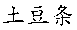 " ) that do not belong to "fresh food", and therefore the final response data generated is inaccurate. On the other hand, in the example with the auxiliary information, the third keyword totally belongs to "fresh food", and therefore the final response data generated is more accurate.

### Embodiments in the third aspect

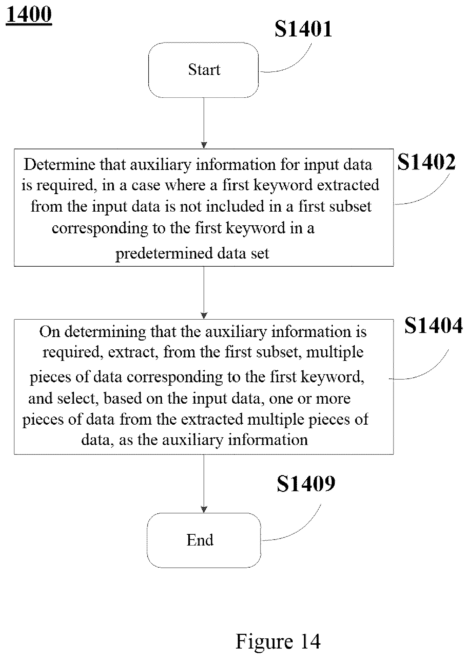

Figure 14 is a flowchart illustrating an exemplary process of an information processing method 1400 according to an embodiment of the present disclosure. As shown in Figure 14, the information processing method 1400 according to an embodiment of the present disclosure may start at S1401 and end at S1409.

For example, the information processing method 1400 may include a determination step S1402 and an auxiliary information acquisition step S 1404.

In the determination step S 1402, it is determined that auxiliary information for input data is required, in a case where a first keyword extracted from the input data is not included in a first subset corresponding to the first keyword in a predetermined data set. For example, the determination step S1402 may be performed by the determination unit 102 in the information processing apparatus 100 according to the embodiment of the first aspect. Therefore, specific details of the step may refer to the above description of the determination unit 102, and are described in brief below.

In the auxiliary information acquisition step S1404, in a case where it is determined in the determination step S1402 that the auxiliary information is required, multiple pieces of data corresponding to the first keyword are extracted from the first subset, and one or more pieces of data are select from the extracted multiple pieces of data based on the input data, as the auxiliary information for generating response data. In this way, more appropriate response data can be obtained, and the accuracy of final response data obtained can be improved. For example, the auxiliary information acquisition step S1404 may be performed by the auxiliary information acquisition unit 104 in the information processing apparatus 100 according to the embodiment of the first aspect. Therefore, specific details of the step may refer to the above description of the auxiliary information acquisition unit 104, and are described in brief below.

In the determination step S1402, a code may be generated based on the input data, and the first keyword and a title corresponding to the first subset are extracted from the code. In this way, the first keyword and the title can be obtained more accurately, and thereby the accuracy of the final response data generated is further improved.

As an example, in the auxiliary information acquisition step S1404, multiple pieces of data corresponding to the first keyword may be extracted from the first subset, prompt information may be generated based on the input data, and one or more pieces of data may be selected based on the generated prompt information from the extracted multiple pieces of data as the auxiliary information. With the auxiliary information obtained in this way, the accuracy of the final response data generated can be further improved.

As another example, in the auxiliary information acquisition step S1404, multiple pieces of data corresponding to the first keyword may be extracted from the first subset, a second keyword may be extracted from the user feedback information, prompt information may be generated based on the input data and matching results between the second keyword and each of the extracted multiple pieces of data, and one or more pieces of data may be selected from the extracted multiple pieces of data based on the generated prompt information, as the auxiliary information. With the auxiliary information obtained in this way, the accuracy of the final response data generated can be further improved.

For example, the user feedback information includes at least one of the following: feedback information on the response data from a first user who inputs the input data; feedback information on the auxiliary information from the first user; feedback information on respective response data from one or more second users different from the first user; and feedback information on respective auxiliary information from one or more second users.

For example, the input data includes at least one of: a product name, a service name, a product category, and a service category. The second keyword includes a product name and/or a service name, and each of the extracted multiple pieces of data includes a product name and/or a service name.

For example, for each piece of data in the extracted multiple pieces of data, feedback information corresponding to the piece of data in the user feedback information may be included in the prompt information in a case where the piece of data matches the second keyword. In addition, in a case where none of the extracted multiple pieces of data matches the second keyword, the prompt information may not include any information in the user feedback information.

### Embodiments in the fourth aspect

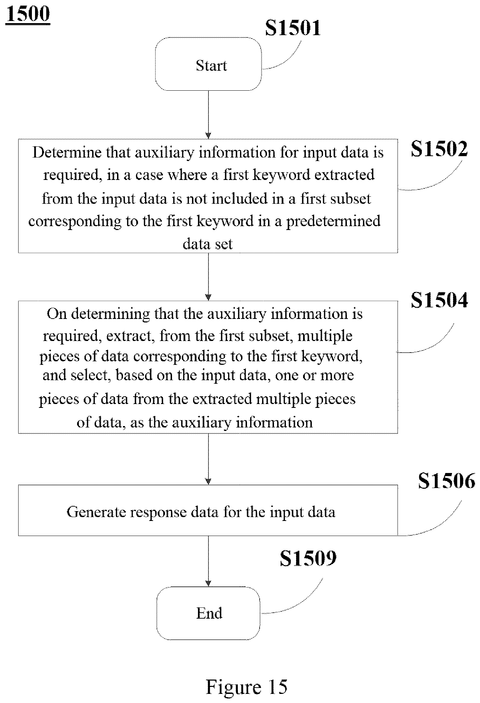

Figure 15 is a flowchart illustrating an exemplary process of an information processing method according to an embodiment of the present disclosure. As shown in Figure 15, the information processing method 1500 according to an embodiment of the present disclosure may start at S1501 and end at S1509.

As shown in Figure 15, the information processing method 1500 according to an embodiment of the present disclosure may include a determination step S1502, an auxiliary information acquisition step S1504, and a response generation step S1506.

For example, the determination step S1502 and the auxiliary information acquisition step S1504 may be similar to the determination step S1402 and the auxiliary information acquisition step S1404 described above in the embodiment of the third aspect, and therefore specific details may be referred to the above description and are not described in detail below.

In the response generation step S1506, response data for the input data may be generated. For example, in a case where it is determined that auxiliary information is not required, the response data may be generated based on the input data. On the other hand, in a case where it is determined that auxiliary information is required, the response data may be generated based on the auxiliary information acquired through the auxiliary information acquisition step S1504 and the input data.

For example, the response generation step S1506 may be performed by the response generation unit 1206 in the information processing apparatus 1200 according to the embodiment of the second aspect. Therefore, specific details of the step may refer to the above description of the response generation unit 1206, and are not described further below.

It should be noted that although examples in which the technology of the present disclosure may be implemented through a large language model are described above, the technology of the present disclosure can be implemented in other ways, such as by writing the corresponding computer program codes and the like. In addition, in a case where the technology of the present disclosure is implemented through a large language model, individual functional modules may be implemented through a same large language model or through different large language models.

It should be noted that the functional configurations and operations of the information processing apparatus and the information processing method according to the embodiments of the present disclosure described above are merely examples rather than a limitation. Those skilled in the art can make modifications on the above embodiments based on the principles of the present disclosure, such as adding, deleting, or combining functional modules in the embodiments. Such modifications all fall within the scope of the present disclosure.

In addition, it should be noted that the method embodiments here correspond to the above apparatus embodiments. Therefore, details not described in the method embodiments may refer to corresponding description in the apparatus embodiments, and are not repeated here.

It should be understood that machine executable instructions in the storage medium and the program product according to embodiments of the present disclosure may be further configured to perform the above-described information processing method. Therefore, details not described here may refer to the description of corresponding parts in the above, and are not repeated here.

Accordingly, a storage medium for carrying the program product including the machine-executable instructions is further included in the present disclosure. The storage medium includes, but is not limited to, a floppy disk, an optical disk, a magneto-optical disk, a storage card, a memory stick, and the like.

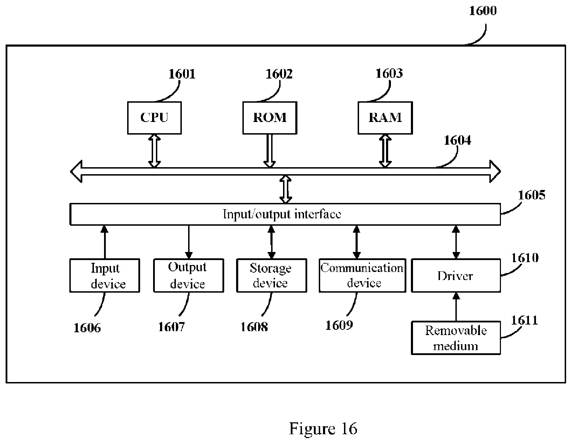

Furthermore, it should be noted that the aforementioned series of processes and devices may be implemented through software and/or firmware. In a case of implemented through software or firmware, the program consisting of the software is mounted to a computer with a dedicated hardware structure (such as a general-purpose personal computer 1600 as shown in Figure 16) from the storage medium or network. The computer, when mounted with various programs, can perform various functions.

In Figure 16, a central processing unit (CPU) 1601 executes various processes according to a program stored in a read-only memory (ROM) 1602 or a program loaded from a storage device 1608 to a random-access memory (RAM) 1603. In the RAM 1603, data required for the CPU 1601 to perform various processes or the like is also stored as necessary.

The CPU 1601, the ROM 1602 and the RAM 1603 are connected to each other via a bus 1604. An input/output interface 1605 is also connected to the bus 1604.

The following components are connected to the input/output interface 1605: an input device 1606 (including a keyboard, a mouse, and the like), an output device 1607 (including a display, such as a cathode ray tube (CRT) and a liquid crystal display (LCD), a loudspeaker, and the like), a storage device 1608 (including a hard disk and the like), and a communication device 1609 (including a network interface card such as a LAN card, a modem, and the like). The communication device 1609 performs communication processes via a network, such as the Internet.

A driver 1610 may be connected to the input/output interface 1605 as needed. A removable medium 1611, such as a magnetic disk, an optical disk, a magnetic optical disk, a semiconductor memory and the like, may be mounted to the driver 1610 as required, so that the computer program read therefrom is mounted into the storage device 1608 as required.

In a case that the above series of processes are implemented by software, the program consisting of the software is mounted from a network, such as the Internet, or from a storage medium, such as the removable medium 1611.

Those skilled in the art should understood that, the storage medium is not limited to the removable medium 1611, as shown in Figure 16, which stores a program and is distributed separately from the device so as to provide the program for the user. Examples of the removable medium 1611 includes a magnetic disk (including a soft disk (registered trademark)), an optical disk (including a compact disk read-only memory (CD-ROM) and a Digital Versatile Disk (DVD)), a magnetic optical disk (including a mini disk (MD) (registered trademark)), and a semiconductor memory. Alternatively, the storage medium may be the ROM 1602, the hard disk contained in the storage device 1608, or the like. The storage medium stores program and is distributed to the user along with an apparatus in which the storage medium is incorporated.

Preferred embodiments of the present disclosure are described above with reference to the drawings. However, the present disclosure is not limited to the above examples. Those skilled in the art can make various alternations and modifications within the scope of the appended claims. It should be understood that these alternations and modifications shall naturally fall within the technical scope of the present disclosure.

For example, multiple functions implemented by a single unit in the above embodiments may be implemented by separate devices. Alternatively, multiple functions implemented by multiple units in the above embodiments may be implemented by separate devices respectively. In addition, one of the above functions may be implemented by multiple units. Such configurations are naturally included in the technical scope of the present disclosure.

In the specification, steps described in the flowchart include not only the processes performed in a time series in the described order, but also the processes performed in parallel or individually rather than necessarily in the time series. Furthermore, the steps performed in a time series may be performed in other order changed appropriately.

The multiple techniques described in this specification may be executed independently of each other, unless there is a conflict. Apparently, any of the multiple techniques can be executed in combinations. In an example, a portion or all of the technology described in any embodiment may be executed in conjunction with a portion or all of the technology described in another embodiment. Additionally, any part or all of the technology described above may be executed in conjunction with another technique not described above.

In addition, the technology according to the present disclosure may be configured as follows.
Note 1. An information processing apparatus, comprising:
   a determination unit, configured to determine that auxiliary information for input data is required, in a case where a first keyword extracted from the input data is not comprised in a first subset corresponding to the first keyword in a predetermined data set; and
   an auxiliary information acquisition unit, configured to, in a case where the determination unit determines that the auxiliary information is required,
      extract, from the first subset, multiple pieces of data corresponding to the first keyword, and
      select, based on the input data, one or more pieces of data from the extracted multiple pieces of data, as the auxiliary information for generating response data.
Note 2. The information processing apparatus according to note 1, wherein the determination unit is further configured to
   generate a code based on the input data, and
   extract, from the code, the first keyword and a title corresponding to the first subset,
   wherein the predetermined data set comprises a plurality of subsets each corresponding to different titles.
Note 3. The information processing apparatus according to note 2, wherein the auxiliary information acquisition unit comprises:
   a data extraction subunit, configured to extract, from the first subset, multiple pieces of data corresponding to the first keyword;
   a prompt information generation subunit, configured to generate prompt information based on the input data; and
   a selection subunit, configured to select, based on the prompt information, the one or more pieces of data as the auxiliary information from the multiple pieces of data extracted by the data extraction subunit.
Note 4. The information processing apparatus according to note 3, wherein the auxiliary information acquisition unit further comprises a keyword extraction subunit configured to extract a second keyword from user feedback information, and
   wherein the prompt information generation subunit is further configured to generate the prompt information based on the input data and matching results between the second keyword and each of the multiple pieces of data extracted by the data extraction subunit.
Note 5. The information processing apparatus according to note 4, wherein for each piece of data in the extracted multiple pieces of data, feedback information corresponding to the piece of data in the user feedback information is comprised in the prompt information in a case where the piece of data matches the second keyword, and
   wherein the user feedback information is not comprised in the prompt information in a case where none of the multiple pieces of data matches the second keyword.
Note 6. The information processing apparatus according to note 4, further comprising a response generation unit, configured to:
   generate the response data based on the input data and the auxiliary information, in a case where the auxiliary information is required; and
   generate the response data based on the input data, in a case where the auxiliary information is not required.
Note 7. The information processing apparatus according to note 4, wherein the input data comprises at least one of: a product name, a service name, a product category, and a service category,
   the second keyword comprises a product name and/or a service name, and
   each of the extracted multiple pieces of data comprises a product name and/or a service name.
Note 8. The information processing apparatus according to any one of notes 4 to 7, wherein the user feedback information comprises at least one of:
   feedback information on the response data from a first user who inputs the input data;
   feedback information on the auxiliary information from the first user;
   feedback information on respective response data from one or more second users different from the first user; and
   feedback information on respective auxiliary information from the one or more second users.
Note 9. The information processing apparatus according to note 6, wherein the determination unit, the auxiliary information acquisition unit, and the response generation unit are implemented by a same or different large language models.
Note 10. An information processing method, comprising:
   determining that auxiliary information for input data is required, in a case where a first keyword extracted from the input data is not comprised in a first subset corresponding to the first keyword in a predetermined data set; and
   on determining that the auxiliary information is required,
      extracting, from the first subset, multiple pieces of data corresponding to the first keyword, and
      selecting, based on the input data, one or more pieces of data from the extracted multiple pieces of data, as the auxiliary information for generating response data.
Note 11. The information processing method according to note 10, further comprising:
   generating a code based on the input data, and
   extracting, from the code, the first keyword and a title corresponding to the first subset,
   wherein the predetermined data set comprises a plurality of subsets each corresponding to different titles.
Note 12. The information processing method according to note 11, further comprising: generating prompt information based on the input data,
   wherein the one or more pieces of data as the auxiliary information are selected from the extracted multiple pieces of data based on the prompt information.
Note 13. The information processing method according to note 12, further comprising extracting a second keyword from user feedback information,
   wherein the prompt information is generated based on the input data and matching results between the second keyword and each of the extracted multiple pieces of data.
Note 14. The information processing method according to note 13, wherein for each piece of data in the extracted multiple pieces of data, feedback information corresponding to the piece of data in the user feedback information is comprised in the prompt information in a case where the piece of data matches the second keyword, and
   wherein the user feedback information is not comprised in the prompt information in a case where none of the multiple pieces of data matches the second keyword.
Note 15. The information processing method according to note 13, further comprising:
   generating the response data based on the input data and the auxiliary information, in a case where the auxiliary information is required; and
   generating the response data based on the input data, in a case where the auxiliary information is not required.
Note 16. The information processing method according to note 13, wherein
   the input data comprises at least one of: a product name, a service name, a product category, and a service category,
   the second keyword comprises a product name and/or a service name, and
   each of the extracted multiple pieces of data comprises a product name and/or a service name.
Note 17. The information processing method according to any one of notes 13 to 16, wherein the user feedback information comprises at least one of:
   feedback information on the response data from a first user who inputs the input data;
   feedback information on the auxiliary information from the first user;
   feedback information on respective response data from one or more second users different from the first user; and
   feedback information on respective auxiliary information from the one or more second users.
Note 18. A computer-readable storage medium storing instructions, wherein the instructions, when executed by a computer, cause the computer to perform the information processing method according to any one of notes 10 to 17.

## Claims

1. An information processing apparatus, comprising:
a determination unit, configured to determine that auxiliary information for input data is required, in a case where a first keyword extracted from the input data is not comprised in a first subset corresponding to the first keyword in a predetermined data set; and
an auxiliary information acquisition unit, configured to, in a case where the determination unit determines that the auxiliary information is required,
extract, from the first subset, multiple pieces of data corresponding to the first keyword, and
select, based on the input data, one or more pieces of data from the extracted multiple pieces of data, as the auxiliary information for generating response data.

2. The information processing apparatus according to claim 1, wherein the determination unit is further configured to
generate a code based on the input data, and
extract, from the code, the first keyword and a title corresponding to the first subset,
wherein the predetermined data set comprises a plurality of subsets each corresponding to different titles.

3. The information processing apparatus according to claim 2, wherein the auxiliary information acquisition unit comprises:
a data extraction subunit, configured to extract, from the first subset, multiple pieces of data corresponding to the first keyword;
a prompt information generation subunit, configured to generate prompt information based on the input data; and
a selection subunit, configured to select, based on the prompt information, the one or more pieces of data as the auxiliary information from the multiple pieces of data extracted by the data extraction subunit.

4. The information processing apparatus according to claim 3, wherein the auxiliary information acquisition unit further comprises a keyword extraction subunit configured to extract a second keyword from user feedback information, and
wherein the prompt information generation subunit is further configured to generate the prompt information based on the input data and matching results between the second keyword and each of the multiple pieces of data extracted by the data extraction subunit.

5. The information processing apparatus according to claim 4, wherein for each piece of data in the extracted multiple pieces of data, feedback information corresponding to the piece of data in the user feedback information is comprised in the prompt information in a case where the piece of data matches the second keyword, and
wherein the user feedback information is not comprised in the prompt information in a case where none of the multiple pieces of data matches the second keyword.

6. The information processing apparatus according to claim 4, further comprising a response generation unit, configured to:
generate the response data based on the input data and the auxiliary information, in a case where the auxiliary information is required; and
generate the response data based on the input data, in a case where the auxiliary information is not required.

7. The information processing apparatus according to claim 4, wherein
the input data comprises at least one of: a product name, a service name, a product category, and a service category,
the second keyword comprises a product name and/or a service name, and
each of the extracted multiple pieces of data comprises a product name and/or a service name.

8. The information processing apparatus according to any one of claims 4 to 7, wherein the user feedback information comprises at least one of:
feedback information on the response data from a first user who inputs the input data;
feedback information on the auxiliary information from the first user;
feedback information on respective response data from one or more second users different from the first user; and
feedback information on respective auxiliary information from the one or more second users.

9. An information processing method, comprising:
determining that auxiliary information for input data is required, in a case where a first keyword extracted from the input data is not comprised in a first subset corresponding to the first keyword in a predetermined data set; and
on determining that the auxiliary information is required,
extracting, from the first subset, multiple pieces of data corresponding to the first keyword, and
selecting, based on the input data, one or more pieces of data from the extracted multiple pieces of data, as the auxiliary information for generating response data.

10. A computer-readable storage medium storing instructions, wherein the instructions, when executed by a computer, cause the computer to perform the information processing method according to claim 9.
